Europäisches Patentamt

European Patent Office

Office européen des brevets

(11) Veröffentlichungsnummer: **0 399 950**
**A1**

## (12) EUROPÄISCHE PATENTANMELDUNG

(21) Anmeldenummer: 90810351.8

(22) Anmeldetag: **10.05.90**

(51) Int. Cl.[5]: **B23Q 11/04, B24B 55/00**

(30) Priorität: 26.05.89 CH 1986/89

(43) Veröffentlichungstag der Anmeldung:
**28.11.90 Patentblatt 90/48**

(84) Benannte Vertragsstaaten:
**DE ES FR GB IT**

(71) Anmelder: **KOCH MASCHINENFABRIK AG**
**Industriegebiet Färch**
**CH-9630 Wattwil(CH)**

(72) Erfinder: **Bruhin, Rolf**
**Langfurrenstrasse 26**
**CH-8623 Wetzikon(CH)**

(74) Vertreter: **Frei, Alexandra Sarah**
**Frei Patentanwaltsbüro Hedwigsteig 6**
**Postfach 95**
**CH-8029 Zürich(CH)**

(54) **Sicherheitseinrichtung an schnelldrehenden Maschinen und Verfahen zur Sicherung solder Machinen.**

(57) Die Sicherheitseinrichtung umfasst im wesentlichen ein auf das Werkzeug (2) bezogenes Codeelement (3), welches bspw. auf den sich beweglichen Teil der Maschine (1) aufgesetzt ist und im Code mindestens die Grenzdrehzahl (RPMmax) des zugeordneten Werkzeugs aufweist, Sowie eine dieses Codelement ablesende Vorrichtung (4), die mit einer Steuerschaltung (8) verbunden ist, in welcher die Ablesesignale (12) verarbeitbar sind, wobei die schnelldrehende Maschine (1) zur Drehzahl-Steuerung mit der Steuerschaltung (8) verbunden ist, sowie ein Mittel (11) zum Einstellen der Drehzahl (RPM) vorgesehen ist, wobei mit diesem Mittel die vom Codelement gelieferte Grenzdrehzahl (RPMmax) nicht überschritten werden kann.

Verfahrensmässig wird dies dadurch bewältigt, in dem jedem Werkzeug ein ablesbarer Code zugeordnet wird, der zumindest die Grenzdrehzahl enthält, und dass beim Anfahren der Maschine der Code abgelesen und zumindest die ermittelte Grenzdrehzahl in eine Steuerschaltung übertragen wird, worauf die Nutzdrehzahl der Maschine freigegeben wird.

FIG. 1

# SICHERHEITSEINRICHTUNG AN SCHNELLDREHENDEN MASCHINEN UND VERFAHREN ZUR SICHERUNG SOLCHER MASCHINEN

Die Erfindung liegt auf dem Gebiet der Sicherheitstechnik und betrifft eine Sicherheitseinrichtung an schnelldrehenden Maschinen gemäss Oberbegriff des Patentanspruchs 1, sowie ein Verfahren zur Sicherung solcher Maschinen.

Bei schnelldrehenden Maschinen, insbesondere bei Schleifmaschinen, besteht die Gefahr, dass das Werkzeug, bspw. eine Schleifscheibe durch die auf sie wirkenden Fliehkräfte über die Bruchgrenze belastet wird. Im Falle eines Bruches sind in der Nähe befindliche Menschen allerhöchster Gefahr ausgesetzt. Aus diesem Grunde bestehen Sicherheitsmassnahmen derart, dass die Werkzeuge nur bis zu einer im Voraus bestimmten Grenzdrehzahl benützt werden dürfen. Diese Einschränkung ist zwingend und trägt zur Sicherheit im Arbeitsbereich bei.

Nun kann es jedoch vorkommen, dass aus irgendwelchen Gründen ein solches Werkzeug über die Grenzdrehzahl hinaus benützt wird. Beispielsweise weil der Arbeiter an der Maschine vergessen hat, dass das Werkzeug nicht mit einer höheren Drehzahl betrieben werden darf oder weil das Werkzeug einfach verwechselt wurde. Der menschlichen Irrtumsfähigkeit sind ja keine Grenzen gesetzt, sodass die Sicherheitsmassnahmen möglichst vom Eingreifen durch den Menschen geschützt werden sollen. Kann auf die Mithilfe des Menschen nicht verzichtet werden, so soll die Sicherheitsmassnahme gegen menschliche Fehlleistungen möglichst immun sein.

Eine solche Sicherheitseinrichtung, die wohl vom Menschen manipuliert wird aber gegen menschliche Fehlleistungen weitgehend immun ist, ist Gegenstand der Erfindung.

Mit Hilfe der nachfolgend aufgeführten Figuren soll ein Ausführungsbeispiel der Erfindung nun diskutiert werden.

Figur 1 zeigt eine schematische Uebersicht der gesamten Einrichtung zum Aufzeigen des übergeordneten Zusammenhangs der Sicherheitsmassnahme.

Figur 2 zeigt einen Bestandteil der Massnahme; es ist ein Satz Codierscheiben zur Ankopplung an das Werkzeug.

Figur 3 zeigt eine gegenüber der Ausführungsform von Figur 1 modifizierte Einrichtung zur Sicherung solcher Maschinen.

Figur 4 zeigt die Spindel einer schnelldrehenden Maschine mit aufgesetztem Codeelement ohne eingespanntes Werkzeug, hier wäre dies eine Schleifscheibe.

Die Grundidee der Erfindung ist folgende. Jedes schnelllaufende Werkzeug hat eine Grenzdrehzahl, welche auf dem Werkzeug vermerkt ist. Einer Vielzahl von Werkzeugen wird ein Satz von Codeelementen zugeordnet, welche Elemente die Grenzdrehzahl darstellen. Der ein Werkzeug benutzende Mensch wählt das zu diesem Werkzeug gehörende Codelement bezüglich der Grenzdrehzahl aus und spannt dieses Codeelement mit dem Werkzeug in die Schnelldrehspindel ein. Die Schnelldrehspindel kann nur über eine mit dem Codeelement kooperierende Sicherheitsschaltung in Bewegung gesetzt werden. Diese Sicherheitsschaltung begrenzt die Arbeitsdrehzahl automatisch dann, wenn die Grenzdrehzahl erreicht ist. Alle Drehzahlen, die niedriger sind als die Grenzdrehzahl, können vom Bediener benützt werden. Das Einspeisen der Information über die Grenzdrehzahl geschieht über die Ablesung des mit dem Werkzeug angeordneten Code und zwar so, dass der Bediener mit einem Lesegerät den Code abliest. Auch dann lässt sich die Maschine noch nicht starten. Erst wenn der Bediener das Lesegerät, vorteilhafterweise in Gestalt einer Lesepistole, an einem bestimmten Ort deponiert hat, gibt die Sicherheitsschaltung die Maschine frei. Dies zum Zweck, dass sichergestellt ist, dass der Code abgelesen und damit in die Sicherheitsschaltung eingespeist wurde. Ausser beim Zuordnen des Codeelements zum Werkzeug, hat der Bediener keine freie Wahl mehr, die Sicherheitseinrichtung führt alle seine Handlungen. Lässt er eine aus, so kann er die Maschine nicht starten und tut er alles korrekt bis zum Maschinenstart, so gelingt es ihm während des Arbeitens nicht, die Grenzdrehzahl zu überschreiten. Er kann also vergessen, welchen Werkzeugtyp er eingespannt hat, er kann an der Sicherheitseinrichtung die ihm am besten zusagende Drehzahl einstellen ohne die Gefahr, irgendwann über die Grenzdrehzahl hinaus zu kommen.

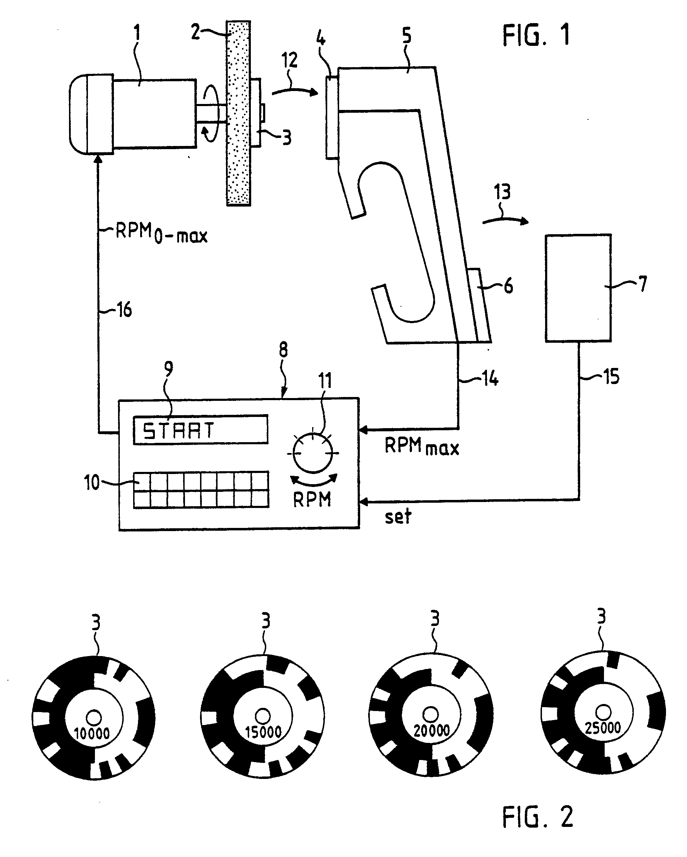

Figur 1 zeigt nun schematisch das oben gesagte. Ein schnelldrehender Spindelantrieb 1 trägt auf seiner Welle ein Werkzeug 2, bspw. eine Schleifscheibe und auf derselben Welle ein Codelement 3, bspw. eine Codescheibe. Ein Lesepistole 5 weist einen Lesekopf 4 und einen Set-Sensor 6 auf. Der Lesekopf 4 liest an der langsam drehenden Codescheibe 3 die Grenz-Drehzahl RPMmax ab und übergibt diese Information über eine Leitung 14 an eine Steuerkonsole 8. Der Set-Sensor arbeitet mit einem Set-Taster 7 zusammen, welcher Set-Taster die An- oder Abwesenheit der Lesepistole feststellen kann. Ueber eine Leitung 15 gibt der Set-Taster ein Set-Signal an die Steuerkonsole 8. Die Steuerkonsole 8 hat eine Anzeige 9, Bedienelemente 10 und ein von Hand betätigbares Einstellmittel 11 zur Einstellung der Tourenzahl des Spindelantriebs. Ueber eine Leitung 16 erhält der Spindelantrieb Signale, mit welchen der Spindelantrieb in einem Drehbereich 0 bis RPMmax steuerbar ist. RPMmax ist eine Funktion der Codescheibe 3, welcher Informationsübergang durch den gebogenen Pfeil 12 dargestellt ist. Ein weiterer gebogener Pfeil 13 zeigt einen Informationsübergang "Pistole eingehängt ja/nein" zum Set-Taster 7, welcher dann das Set-Signal abgibt. Die gebogenen Pfeile zeigen den Weg der Sicherheitsinformationen an, die nötig sind, um das menschliche Tun unabhängig von seiner geistigen Verfassung zu steuern.

Die Handlungsabfolge ist nun folgende: der dem Werkzeug 2 zugeordnete Code des Codeelements 3 wird mittels der Pistole abgelesen (Pfeil 12) und die Grenzdrehzahl RPMmax an die Steuerkonsole gesendet. Damit ist die Anlage aber noch nicht startbereit. Erst muss noch die Set-Bedingung erfüllt sein. Die Pistole wird mit dem Set-Sensor 6 an den Set-Taster 7 gebracht (Pfeil 13), worauf das Set-Signal an die Steuerkonsole gesendet wird. Nun zeigt die Anzeige 9 auf der Steuerkonsole "Start" an und der Bediener kann am Drehknopf 11 das Werkzeug hochfahren und zwar auf die optimale Arbeits-Drehzahl. Nun kann die Grenzdrehzahl-Bedingung vom Bediener getrost vergessen werden; er kann rauf und runter fahren wie er es braucht, nur die Grenzdrehzahl kann er nicht überschreiten.

Ausgenommen die Zuordnung des Codeelements zum Werkzeug, sind alle nötigen Sicherheits-Handlungen des Bedieners zwangsgeführt und er kann weder mit der Arbeit beginnen, wenn er nicht alles erfüllt, noch kann er bezüglich der Sicherheitshandlung etwas falsch machen, auch nicht während der Arbeit (zu hohe Drehzahl). Der Sicherheitskreis ist über den Informationspfad 12, 13, 16 geschlossen und die einzige übrigbleibende Handlung, nämlich das Drehen am Knopf 11, ist sicherheitsbegrenzt.

Figur 2 zeigt ein Beispiel von vier Codescheiben für 10'000, 15'000, 20'000 und 25'000 RPM. Selbstverständlich kann jede geeignete Codierung dazu dienen, um die Information über das Werkzeug, welche nicht nur die Grenzdrehzahl betreffen muss, zu übertragen. Dies kann auch bei Maschinenstillstand geschehen (statt einer Lesedrehung, die an der Steuerkonsole ausgelöst werden kann). Hier lässt sich auch noch der einzig mögliche Fehler, der von der Bedienperson noch gemacht werden kann, eliminieren, in dem einem schnelldrehenden Werkzeug schon bei dessen Herstellung ein lesbarer Code mitgegeben wird. Mit anderen Worten, eine Schleifscheibe trägt zum Beispiel diesen Code schon, wenn sie vom Benutzer in die Maschine eingespannt wird. Damit wird das Unsicherheitselement der Zuordnung durch den Bediener aus der Welt geschafft.

In einer weiterentwickelten Variante kann der Spindelantrieb eingeschaltet werden und beim ersten Hochfahren wird der Code vom Werkzeug abgelesen und an die Steuerkonsole gesendet. Die initiale Einschaltung erlaubt nur eine geringe Drehzahl. Wird der Code nicht korrekt abgelesen, so lässt sich die Maschine nicht beschleunigen. Erst wenn durch die korrekte Ablesung eine Freigabe erfolgt, kann beschleunigt werden, allerdings nur bis zu Grenzdrehzahl. Damit entfällt die Sicherheitshandlung durch die Bedienperson, in dem sie mit der Lesepistole hantieren muss. Allerdings trägt eine "Sicherheitshandlung" durch die Bedienperson stets zu einem höheren Sicherheitsgefühl bei, da die Bedienperson nicht alleine auf das blinde Vertrauen in die Technik angewiesen ist.

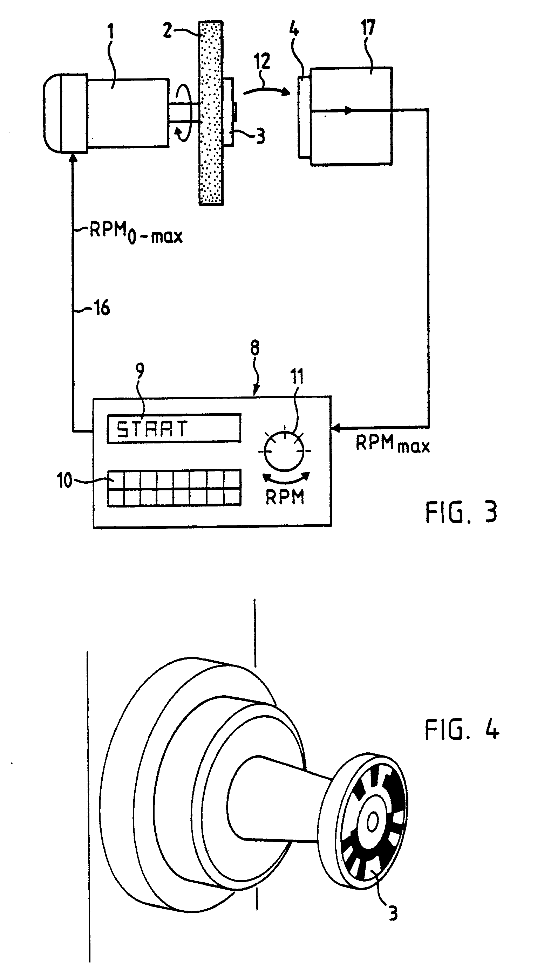

Figur 3 zeigt schematisch eine Sicherheitseinrichtung, die automatisch, d.h. ohne Teilnahme des Menschen die Grenzdrehzahl-Bedingung erfüllt. In Anlehnung an Figur 1 ist eine analoge Darstellung gewählt. An Stelle einer Lesepistole ist ein Lesekopf 17 in Bezug zum Codeelement 3 gesetzt. Unter Bezug ist gemeint, dass es keine Rolle spielt, ob das Codelement vor oder hinter dem Werkzeug angeordnet ist. Falls bspw. das Codelement auf der anderen Seite der Schleifscheibe angeordnet ist, würde der Lesekopf 17 auch auf der anderen Seite, bspw. integriert in den Spindelantrieb 1 angeordnet sein. Da die Ablesung ohne menschliche Hilfe durchgeführt wird, entfällt die Set-Bedingung. Nur die RPMmax-Bedingung wird der Steuerkonsole 8 mitgeteilt, welche wie in der Variante mit Sicherheitshandlung dann den Spindelantrieb zwischen RPM(0-max) arbeiten lässt. Die Startbedingung wird dann angezeigt, wenn die selbsttätige Ablesung des Codes erfolgt ist.

Das Anzeigefenster kann natürlich noch weitere Informationen an den Menschen abgeben, als nur die Startmeldung. Sie kann auch entsprechend durchzuführende Handlungen anzeigen, also den Menschen anleiten, bspw. mit der Meldung "Lesepistole einhängen" und andere mehr.

Figur 4 zeigt die Spindel einer schnelldrehenden Schleifmaschine mit aufgesetzter Codescheibe ohne eingespannte Schleifscheibe. Im Falle es vorgesehen ist, dass die Schleifscheibe schon vom Hersteller mit solch einem Code ausgerüstet ist, so entfällt die Montage einer zusätzlichen Codescheibe, soweit es die Grenzdrehzahl betreffen würde. Es können aber zusätzliche Codierscheiben aufgesetzt werden, sobald in eine Ablesehandlung weitere Informationen eingespiesen werden sollen. Die könnten bspw. Angaben über das Alter des Werkzeuges, dessen Lagerung (feucht, heiss, etc.), durch welche die Grenzdrehzahlen bspw. modifiziert werden müssten. Dann ist auch auf diese Weise eine "Korrektur" der Code-Werte in Richtung Sicherheit möglich.

Mit der Sicherheitseinrichtung an schnelldrehenden Werkzeugen können wirkungsvoll Unfälle verhindert werden, da sie zuverlässig menschliche Fehlhandlungen ausschaltet und zudem den Menschen zwingt, die richtigen Sicherheits-Handlungen auszuführen.

Die Sicherheitseinrichtung umfasst im wesentlichen ein auf das Werkzeug 2 bezogenes Codeelement 3, welches bspw. auf den sich beweglichen Teil der Maschine 1 aufgesetzt ist und im Code mindestens die Grenzdrehzahl (RPMmax) des zugeordneten Werkzeugs aufweist, sowie eine dieses Codelement ablesende Vorrichtung 4, die mit einer Steuerschaltung 8 verbunden ist, in welcher die Ablesesignale 12 verarbeitbar sind, wobei die schnelldrehende Maschine 1 zur Drehzahl-Steuerung mit der Steuerschaltung 8 verbunden ist, sowie ein Mittel 11 zum Einstellen der Drehzahl (RPM) vorgesehen ist, wobei mit diesem Mittel die vom Codelement gelieferte Grenzdrehzahl (RPMmax) nicht überschritten werden kann.

Verfahrensmässig wird dies dadurch bewältigt, in dem jedem Werkzeug ein ablesbarer Code zugeordnet wird, der zumindest die Grenzdrehzahl enthält, und dass beim Anfahren der Maschine der Code abgelesen und zumindest die ermittelte Grenzdrehzahl in eine Steuerschaltung übertragen wird, worauf die Nutzdrehzahl der Maschine freigegeben wird. In einer erweiterten Variante wird die Nutzdrehzahl der Maschine erst dann freigegeben, wenn ein zusätzliches Signal aus einer von einem Menschen durchgeführten Handlung in der Steuerschaltung vorliegt, bspw. ein Signal, das generiert wird, wenn die Lesepistole an ihren Platz zurück gebracht wird.

## Ansprüche

1. Sicherheitseinrichtung an schnelldrehenden Maschinen, dadurch gekennzeichnet, dass der sich bewegende Teil der Maschine (1) ein auf das Werkzeug (2) bezogenes Codeelement (3) aufweist, welches mindestens die Grenzdrehzahl (RPMmax) des zugeordneten Werkzeugs enthält, und dass eine dieses Codelement ablesende Vorrichtung (4) vorgesehen ist, die mit einer Steuerschaltung (8) verbunden ist, in welcher die Ablesesignale (12) verarbeitbar sind, und dass die schnelldrehende Maschine (1) zur Drehzahl-Steuerung mit der Steuerschaltung (8) verbunden ist und ein Mittel (11) zum Einstellen der Drehzahl (RPM) vorgesehen ist, wobei mit diesem Mittel die vom Codelement gelieferte Grenzdrehzahl (RPMmax) begrenzt und nicht überschreitbar ist.

2. Einrichtung nach Anspruch 1, dadurch gekennzeichnet, dass die das Codelement (3) ablesende Vorrichtung (4) in einer Bedienpistole (5) angeordnet ist.

3. Einrichtung nach Anspruch 1, dadurch gekennzeichnet, dass die das Codelement (3) ablesende Vorrichtung (4) zur schnelldrehenden Maschine (1) in einer feststehenden Lesestation (17) angeordnet ist.

4. Einrichtung nach Anspruch 2, dadurch gekennzeichnet, dass die Bedienpistole (5) eine Vorrichtung (6,7) aufweist, mit welcher ein bestimmter Standort der Bedienpistole festgestellt werden kann.

5. Einrichtung nach Anspruch 4, dadurch gekennzeichnet, dass die Vorrichtung (6,7) zur Detektion des Standortes der Bedienpistole (5) eine elektrische Verknüpfung (15) mit der Steuerschaltung (8) aufweist, um die Startbedingung (set) der Maschine (1) mitzubestimmen.

6. Einrichtung nach einem der Ansprüche 1 bis 5, dadurch gekennzeichnet, dass das Codeelement (3) eine Codescheibe ist, welche auf der gleichen Spindel, auf welcher das Werkzeug (2) eingespannt ist, angeordnet ist.

7. Einrichtung nach Anspruch 6, dadurch gekennzeichnet, dass Codescheiben (3) vorhanden sind, deren Code die Grenzdrehzahlen für an der schnelldrehenden Maschine (1) zu verwendende Werkzeuge (2) enthalten.

8. Einrichtung nach Anspruch 7, dadurch gekennzeichnet, dass die Codescheiben (3) deren Code weitere Information zu Werkzeugen (2) enthalten.

9. Verfahren zur Sicherung schnelldrehender Maschinen, dadurch gekennzeichnet, dass jedem Werkzeug ein ablesbarer Code zugeordnet wird, der zumindest die Grenzdrehzahl enthält, dass beim Anfahren der Maschine der Code abge lesen und zumindest die ermittelte Grenzdrehzahl in eine Steuerschaltung übertragen wird, worauf die Nutzdrehzahl der Maschine freigegeben wird.

10. Verfahren nach Anspruch 9, dadurch gekennzeichnet, dass die Nutzdrehzahl der Maschine erst dann freigegeben wird, wenn ein zusätzliches Signal aus einer von einem Menschen durchgeführten Handlung in der Steuerschaltung vorliegt.

11. Verfahren nach Anspruch 10, dadurch gekennzeichnet, dass das zusätzliche Signal dadurch generiert wird, dass die Codelesevorrichtung an einen bestimmten Platz getan wird.

FIG. 1

RPM$_{0-max}$

START

RPM$_{max}$

RPM

set

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 210 184 (VEB) * Seite 2,3, Zeilen 1-4; Fig. 1 * -- | 1,3,6, 7,9 | B 23 Q 11/04 B 24 B 55/00 |
| A | US - A - 3 932 962 (DEVILLERS) * Fig. 1 * -- | 1,3,9 | |
| A | DE - B - 1 502 521 (MSO) * Anspruch 1; Spalte 1, Zeilen 50-57; Spalte 2, Zeilen 4-11 * -- | 1,3,9 | |
| A | DE - B1 - 3 021 065 (WERKZEUGMASCHIENFABRIK) * Anspruch * ---- | 1 | |

RECHERCHIERTE
SACHGEBIETE (Int Cl⁵)

B 23 Q 11/00
B 23 Q 17/00
B 24 B 49/00
B 24 B 55/00
G 05 D 13/00

Der vorliegende Recherchenbericht wurde für alle Patentansprüche erstellt.

| Recherchenort | Abschlußdatum der Recherche | Prüfer |
|---|---|---|
| WIEN | 18-07-1990 | NIMMERRICHTE |